## Europäisches Patentamt

## European Patent Office

## Office européen des brevets

(19)

(11) Veröffentlichungsnummer: **0 001 747**

**A1**

(12)

# EUROPÄISCHE PATENTANMELDUNG

(21) Anmeldenummer: **78100968.3**

(22) Anmeldetag: **22.09.78**

(51) Int. Cl.²: **G 03 B 27/72**

(30) Priorität: 23.09.77 AT 6827/77
24.10.77 AT 7577/77
15.02.78 AT 1078/78
15.02.78 AT 1079/78

(43) Veröffentlichungstag der Anmeldung:
16.05.79 Patentblatt 79/10

(84) Benannte Vertragsstaaten:
BE CH DE FR GB LU NL SE

(71) Anmelder: ACO-Industriebedarf Gesellschaft m.b.H.
Rudolf-Waisenhorngasse 14
A-1235 Wien(AT)

(72) Erfinder: Barislovits, Peter
Nussdorferstrasse 57
A-1090 Wien(AT)

(74) Vertreter: Dorner, Jörg, Dr.-Ing. et al,
Landwehrstrasse 37
D-8000 München 2(DE)

(54) Verfahren und Vorrichtung zur Bewertung von Filmnegativen hinsichtlich ihrer Kopierfähigkeit.

(57) Verfahren und Vorrichtung zur Bewertung von Filmnegativen hinsichtlich ihrer Kopierbarkeit, wobei die Transparenz der Filme (1) längs Linien abgetastet (2,3,4) wird, die Transparenz abbildende Einzelsignale mit den jeweils darauf folgenden Einzelsignalen verglichen (12) werden und bei Erreichen bzw. Überschreiten einer vorwählbaren Differenz der aufeinander folgenden Einzelsignale Kontrastsignale abgegeben werden, die gezählt (13) werden und bei Unterschreiten einer vorbestimmten Anzahl von Kontrastsignalen pro Bild das Ausscheiden des betreffenden Negativbildes vom Kopiervorgang bewirkt wird.

FIG.1

EP 0 001 747 A1

**DORNER & HUFNAGEL**
**PATENTANWÄLTE**

LANDWEHRSTR. 37 8000 MÜNCHEN 2
TEL. 0 89 / 59 67 54

München, den 21. September 1978
Anwaltsaktenz.: 172-Pat.9 Europa

ACO-Industriebedarf Gesellschaft m.b.H., Rudolf-Waisenhorngasse 14, A 1235 Wien, Österreich

---

Verfahren zur Bewertung von Filmnegativen hinsichtlich ihrer Kopierfähigkeit

*BEZEICHNUNG GEÄNDERT siehe Titelseite*

---

Die Erfindung betrifft ein Verfahren zur Bewertung von Filmnegativen hinsichtlich ihrer Kopierfähigkeit sowie eine Vorrichtung zur Durchführung dieses Verfahrens. Diese Bewertung erfolgt hinsichtlich der Schärfe, hinsichtlich Farbdominanten und hinsichtlich der Dichte, wobei die Bewertung in Teilbereichen der Bilder unterschiedlich sein kann.

Damit ein Filmnegativ kopierfähig ist, muß es verschiedenen Kriterien entsprechen:

1. Das Negativ muß innerhalb des Bereiches der aufzulösenden Bildeinzelheiten scharf sein. Das bedeutet, daß

   a) die Aufnahme nicht verwackelt sein darf, d.h. bei genauer Betrachtung des Negatives darf keine Vielzahl von Ab-

      bildungen vorhanden sein.

0001747

b) bei der Aufnahme die Entfernung richtig eingestellt
worden sein muß, d.h. die Details gegen ihre Umgebung
klar abgegrenzt sein müssen.

2) Das Negativ muß richtig belichtet sein. Das bedeutet, daß

   a) das Negativ weder extrem über - oder unterbelichtet sein
   darf. Die mittlere Dichte muß innerhalb jener Grenzen
   liegen, in der die Korrektur der Dichte während des
   Kopiervorganges zu den Parametern des Kopierpapieres
   noch steuerbar ist.

   b) die zulässige mittlere Dichte, gemessen über das Gesamtnegativ, auch partiell nachweisbar sein muß.

3) Aus dem Negativ/klar erkennbar sein, daß es sich um eine
                 muß
   gewollte Aufnahme handelt. Das bedeutet, daß unbeabsichtigt
   ausgelöste Belichtungen als solche erkannt werden sollen.


Es wird dabei vorausgesetzt, daß die Filmvorlage einwandfrei
entwickelt wurde. Weiters werden selbstverständlich künstlerisch
gewollt unscharfe Bilder ebenfalls als unscharf und damit als
nicht kopierfähig beurteilt.


Da Filme durch Kopierautomaten, in denen Abzüge hergestellt
werden, mit einer Geschwindigkeit von etwa 8.000 bis 10.000
Bildern pro Stunde hindurchlaufen, besteht keine Möglichkeit,
die Filme vor dem Kopiervorgang visuell dahingehend zu bewerten, ob sie die für den Kopiervorgang erforderlichen Qualitäten
aufweisen. Deshalb werden bisher vorerst von allen Negativen
Papierkopien hergestellt und werden nachträglich solche Bilder,
die den Qualitätsnormen nicht entsprechen, ausgeschieden.

Da z.B. im Schnitt etwa 20% der Negative für die Herstellung
von hinreichend scharfen Abzügen nicht geeignet sind, bedeutet
dies einen Verlust von etwa 20% an Kopierleistung, d.h. an
Arbeitszeit und Material, insbesondere an Kopierpapier und
Chemikalien für die Herstellung von Kopien.

Selbstverständlich stellt der angegebene Prozentsatz einen
Mittelwert dar, der bei hochwertigen Kameras in der Regel
unterschritten wird, jedoch bei billigen Kameras auch überschritten werden kann und der zudem wesentlich vom Können
und technischen Verständnis des jeweiligen Photographen abhängt.

Um eine automatische Beurteilung von Negativen hinsichtlich
ihrer Schärfe zu ermöglichen, muß ein Maß für die Schärfe
gefunden werden. Wenn ein Negativ innerhalb des Bereiches der
aufzulösenden Bildeinzelheiten scharf ist, sind die Details der
Aufnahme voneinander klar abgegrenzt. Es müssen daher in diesem
Bereich Änderungen in der Schwärzungauftreten. Von Bedeutung
ist jedoch nicht die Größe der Änderung an sich, sondern die
Änderung in der Zeiteinheit, die durch die Steilheit der
Schwärzungskurve zum Ausdruck kommt.

Als Bereich der aufzulösenden Bildeinzelheiten kann eine Breite
von etwa 10 µ angenommen werden. Da in einer unscharfen Kopie
ein Hell-Dunkel-Übergang zwar mit einem großen Unterschied in
der Transparenz zwischen den dunkelsten und den hellsten Stellen

Überganges
jedoch mit einem verhältnismäßig breiten Bereich des zwischen
diesen beiden Extremwerten abgebildet wird, können aus der
Häufigkeit des Auftretens von Bereichen mit besonderer Steilheit Rückschlüsse auf die Schärfe des Negatives gezogen werden.
Je höher die Anzahl von Bereichen der Schwärzungskurve mit
besonderer Steilheit ist, um so besser sind Bildeinzelheiten
aufgelöst und kann die Filmvorlage als scharf bewertet werden.

Die Erkenntnis, aus der Anzahl der Lichtesprünge auf die Schärfe
einer Filmvorlage schließen zu können, wurde bei der Konstruktion
von Geräten zur automatischen Schärfeerkennung schon mehrfach
verwendet.

Alle diese Versuche arbeiteten nach dem gleichen Verfahren:
Die Vorlagen wurden nacheinander in eine Prüfposition transportiert, in der nebeneinanderliegende Bereiche in der Größe
der Aufnahmedetails fotoelektrisch ausgemessen werden und die
Wertedifferenz nebeneinanderliegender Bereiche mit Grenzwerten
verglichen und bzw. oder die Zahl bzw. die Größe der die Grenz-
werte übersteigenden Differenzwerte aufsummiert und als Maß
für die Bildschärfe mit einem Sollwert verglichen wurden.

Weiters wurde versucht, aus der Transparenzkurve eines Normalnegatives eine Ortsfrequenz abzuleiten, die bei kopierfähigen
Vorlagen regelmäßig noch vorhanden ist.

Bei all diesen Verfahren wurde die fotoelektrische Ausmessung
mittels komplizierter mechanischer Einrichtungen vorgenommen.

Versuche, dies zu umgehen und die Ausmessung mittels Videosystemen vorzunehmen, scheiterten entweder an der zu geringen Auflösung der Systeme oder an den hohen Arbeitsgeschwindigkeiten bei der Verarbeitung der Informationen.

Alle diese Verfahren waren aber mit einem Überlegungsfehler behaftet:

Es wurde immer die Gesamtfläche des Negatives einer gleichwertigen Prüfung unterzogen, wogegen die Gesetze der Verteilung von Schärfe und Unschärfe nach einem statistisch ermittelten Bildaufbau unberücksichtigt blieben. Die Erkenntnis, daß nicht jeder Bildausschnitt gleichwertig ist - ein bei der Beurteilung der Dichte bewährtes und gängiges Verfahren - wurde hierbei nicht angewandt.

Der Erfindung liegt danach die Aufgabe zugrunde, ein Verfahren bzw. eine elektronische Vorrichtung zur automatischen Qualitätsbestimmung von Negativbildern zu schaffen. Zudem soll eine leichte Einstellbarkeit derjenigen Werte, die ein Ausscheiden von Bildern im Kopiervorgang bewirken, erzielbar sein bzw. soll auch eine unterschiedliche Bewertung des Bildzentrums bzw. des Umfeldes möglich sein, wobei der Bereich des Zentrums bzw. des Umfeldes in einfacher Weise veränderbar sein soll.

Dies wird erfindungsgemäß dadurch erzielt, daß die Transparenz der Filme längs Linien abgetastet wird, die Transparenz abbildende Einzelsignale mit den jeweils darauf
folgenden Einzelsignalen verglichen werden und bei Erreichen
bzw. Überschreiten einer vorwählbaren Differenz der aufeinanderfolgenden Einzelsignale Kontrastsignale abgegeben werden,
die gezählt werden, wobei bei Unterschreiten einer vorbestimmten Anzahl von Kontrastsignalen pro Bild das Ausscheiden
des betreffenden Negativbildes vom Kopiervorgang bewirkt wird.

Vorzugsweise ist die Anzahl von Kontrastsignalen pro Bild,
bei deren Nichterreichen das Ausscheiden eines Bildes bewirkt
wird, einstellbar bzw. ist auch die zur Abgabe eines Kontrastimpulses vorgewählte Differenz der Einzelsignale für unterschiedliche Bereiche der Negativbilder einstellbar.

Nach weiteren vorzugsweisen Merkmalen werden die Einzelsignale
von den die Transparenz des Filmes in den abgetasteten Linien
abbildenden Signalen mittels eines von einem von der Filmbewegung gesteuerten Taktsignales abgeleitet, wobei die Einzelsignale den Werten der die Transparenz des Filmes abbildenden
Signale in den Zeitpunkten des Auftretens der Taktsignale
entsprechen können. Insbesondere kann die Transparenz der Filme
längs zu deren Bewegungsrichtung parallelen Zeilen abgetastet
werden.

Eine erfindungsgemäße Vorrichtung zur Durchführung dieses Verfahrens enthält eine feststehende Lichtquelle, mittels welcher durch den Schlitz einer Blende hindurch jenseits des Filmes angeordnete, lichtempfindliche Sensoren beaufschlagbar sind, deren Ausgänge an eine Auswertschaltung geführt sind, an die ein Zähler anschließt, dessen Ausgang den Kopiervorgang für die Negativbilder des Filmes steuert. Dabei können die Auswertschaltung und der Zähler durch einen Schlitzinitiator gesteuert werden, der mit der Bewegung des Filmes gekuppelt ist. Insbesondere können die Ausgänge der Sensoren an einen die Signale korrigierenden Meßverstärker geführt sein.

Bei dem vorstehend erläuterten Verfahren muß dann eine Umstellung der Grenz-werte, die hinsichtlich der Dichtesprünge erreicht werden müssen, vorgenommen werden, sobald von der Abtastung des Zentrums zur Abtastung des Umfeldes bzw. von der Abtastung des Umfeldes zur Abtastung des Zentrums übergegangen wird. Aufgrund der Konfiguration des Zentrums bzw. des Umfeldes pro Zeile sind unterschiedliche Summen der Kontrastsignale erforderlich, um anzuzeigen, daß den Schärfekriterien entsprochen ist. Die den Zeilen zugeordneten Zählerstände müssen daher pro Zeile mit unterschiedlichen Mindestwerten verglichen werden, was einen besonderen elektronischen Aufwand verursacht.

Gemäß dem vorstehend erläuterten Verfahren ist es zudem möglich, die Kontrastsignale, die durch die Zeilen des Um-

feldbereiches bewirkt werden, jeweils einem ersten bzw. einem ersten und einem zweiten Zähler zuzuführen sowie die Kontrastsignale, die durch die Zellen des Zentrums bewirkt werden, jeweils an einen dritten Zähler abzugeben. Die Filmnegative werden dabei dann als scharf gewertet, wenn sämtliche Zähler vorgegebene Mindestwerte aufweisen.

Bei der Auswertung der Zählerstände ist jedoch zu berücksichtigen, daß die dem Zentrum zugeordneten Zähler andere Werte erreichen müssen als die dem Umfeld zugeordneter Zähler. Weiters müssen aufgrund der Konfiguration des Zentrums bzw. des Umfeldes, aufgrund welcher die Teilanteile des Zentrums und des Umfeldes von Zeile zu Zeile unterschiedlich sind, sämtliche Zähler unterschiedliche Mindestwerte anzeigen, um das Kriterium der Schärfe des ausgemessenen Bereiches als erfüllt anzuzeigen. Damit wird jedoch gleichfalls die Auswertung der Zählerstände sehr aufwendig.

Durch die Erfindung wird weiters ein Verfahren angegeben, durch das diese Nachteile vermieden werden. Dies wird erfindungsgemäß dadurch erzielt, daß zu den Kontrastsignalen Signale hinzugefügt werden, deren Anzahl in Abhängigkeit davon, ob eine Bewertung des Zentrums oder des Umfeldes des Bildes erfolgt, gewählt wird. Vorzugsweise wird die Summe sämtlicher Signale pro abgetasteter Zeile ermittelt und wird bei Erreichen einer vorgegebenen Mindestsumme ein Signal abgegeben, das den Kopiervorgang bewirkt.

Alternativ dazu können für das Zentrum bzw. für die Umfeldbereiche jeweils die Verhältnisse der Summen der Kontrastsignale und der zusätzlichen Signale zu den im gleichen
Zeitraum abgegebenen Längengebersignale ermittelt werden
und können jeweils bei Erreichen eines für alle Bereiche
konstanten Grenzwertes Freigabesignale abgegeben werden.

Für die einzelnen Bereiche der Filmnegative, für die unterschiedliche Schärfekriterien gelten, können unterschiedliche
Anzahlen von zusätzlichen Signalen pro Anzahl der Taktimpulse
eingestellt werden. Die Zuschaltung der zusätzlichen Signale
kann dabei mittels eines Kreuzschienenverteilers erfolgen.
Ein Kreuzschienenverteiler ist hierfür insoferne sehr geeignet,
als an diesem die Konfiguration des gewählten Umfeldes bzw.
Zentrums leicht erkennbar und auch durch Laien jederzeit in
einfacher Weise verstellbar ist.

Der Erfindung liegt schließlich die Erkenntnis zugrunde, daß
entgegen den Verhältnissen, die früher bei Kopierautomaten
bestanden haben, nunmehr aufgrund der Tatsache, daß die
Regelung der Antriebsmotoren für die Förderwalzen des Filmes
auf die zu bewegenden Massen, insbesondere der Filmspulen und
des Filmes, abgestimmt sind, der zwischen dem Film und den
Förderwalzen auftretende Schlupf vernachlässigbar klein ist.
Aufgrund dieser Erkenntnis wird insoferne eine Vereinfachung
und Verbilligung in Kopierautomaten ermöglicht, als von der

0001747

Anordnung von Tastrollen bzw. Tastwalzen für den Antrieb
der Einrichtung zur Abgabe der Längengebersignale abgesehen
werden kann.

Dies wird erfindungsgemäß dadurch erzielt, daß die Einrichtung zur Erzeugung der Längengebersignale mit dem Antrieb für die Filmbewegung mechanisch oder elektromagnetisch
gekuppelt ist.

Nach bevorzugten Ausführungsbeispielen ist der Antrieb für
die Filmbewegung mit einem Generator gekuppelt bzw. ist der
Antrieb mit einer Loch-, Raster- oder Spiegelscheibe gekuppelt,
die zwischen einer Lichtquelle und einem Fotoelement angeordnet ist.

Die Verfahren und Vorrichtungen gemäß der Erfindung sind
nachstehend anhand von in der Zeichnung dargestellten Ausführungsbeispielen näher erläutert.

Es zeigen:

Fig. 1 ein Blockschaltbild einer erfindungsgemäßen Vorrichtung,

Fig. 2 ein Impulsdiagramm,

Fig. 3 die Aufteilung eines Filmnegatives in Zentrum und
   Umfeld,

Fig. 4 eine genaue Darstellung einer erfindungsgemäßen
   Schaltung,

BAD ORIGINAL

Fig. 5 und 6 Signal- bzw. Impulsdiagramme analog den Diagrammen der Fig. 2,

Fig. 7 eine graphische Darstellung zur Erläuterung der
    Lichteänderungen,

Fig. 8 analog der Fig. 7 die Unterteilung von Negativen in
    Zentrum und Umfeld,

Fig. 9 die Darstellung einer Kopiereinrichtung,

Fig.10 eine schematische Darstellung einer Einrichtung zur
    Durchführung des weiteren erfindungsgemäßen Verfahrens,

Fig.11 ein Impulsdiagramm,

Fig.12 einen Kreuzschienenverteiler,

und die Fig. 13 bis 16 vier verschiedene Ausführungsbeispiele
    einer weiteren erfindungsgemäßen Vorrichtung in schaubild-
    licher Darstellung.


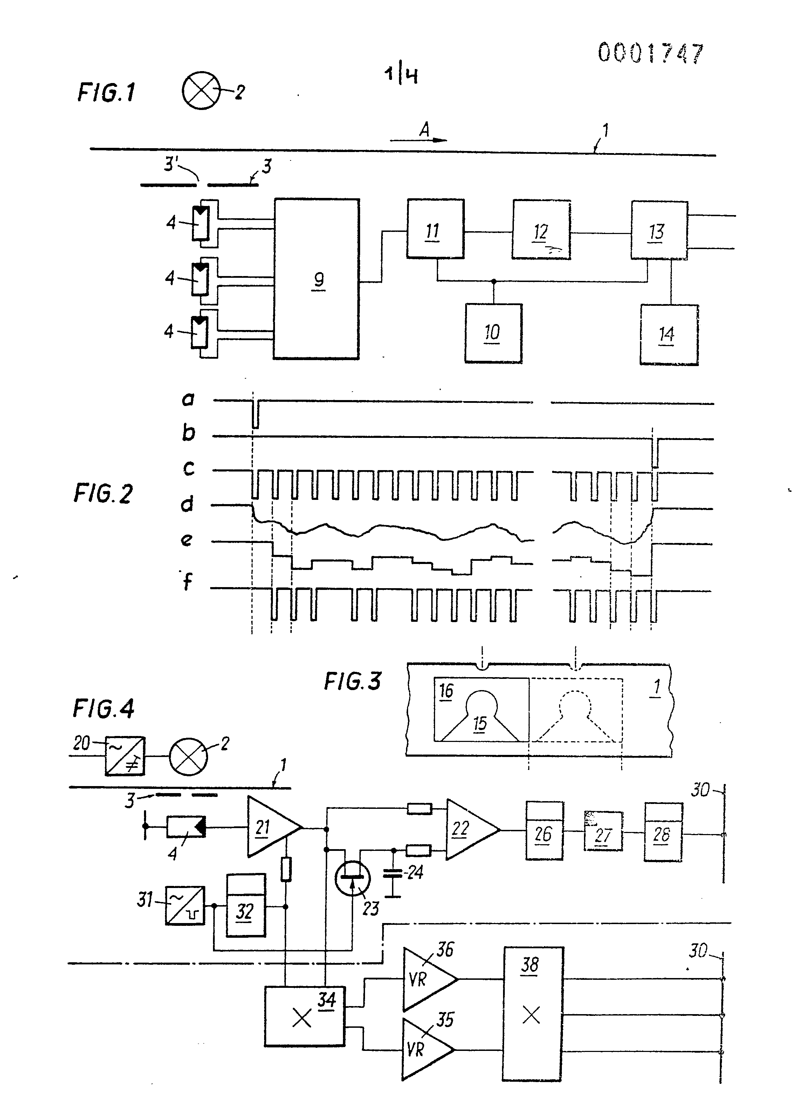

Wie aus Fig. 1 ersichtlich ist, ist im Bewegungsbereich eines
Filmes 1, der in Richtung des Pfeiles A mit einer Geschwindigkeit von etwa 8.000 bis 10.000 Bildern pro Stunde einem Kopierautomaten zugeführt wird, eine feststehende Scannerlampe 2
vorgesehen, die den bewegten Film 1 beleuchtet. Unterhalb des
Filmes 1 liegt der Scannerlampe 2 eine gleichfalls fest angeordnete Schlitzblende 3 gegenüber, deren Schlitz 3' sich über
die gesamte Breite des Filmes 1 erstreckt und der eine

Öffnungsbreite von weniger als 0,1 mm, vorzugsweise eine Öffnungsbreite von 10μ, aufweist.

Innerhalb des Schlitzes 3' der Blende 3 sind weiters nebeneinander eine Mehrzahl bis eine Vielzahl von photoelektrischen Sensoren 4, z.B. Photodioden, ebenfalls fest angeordnet. Die photoelektrischen Sensoren 4 liegen somit nebeneinander im Bereich des von der Lichtquelle 2 erzeugten, den Film 1 durchsetzenden und durch den Schlitz 3' der Schlitzblende 3 gelangenden Lichtstrahles und sie erstrecken sich über die gesamte Breite des Filmes 1.

In der Zeichnung sind nur drei Sensoren 4 dargestellt, die der besseren Verständlichkeit halber in einer gegenüber ihrer tatsächlichen Lage um 90° verschwenkten Ebene gezeichnet sind. Es sei darauf hingewiesen, daß die Schlitzblende 3 auch zwischen der Lampe 2 und dem Film 1 angeordnet sein könnte.

Die Ausgänge sämtlicher Sensoren 4 sind an einen Meßverstärker 9 geführt, in dem eine sogenannte Driftkompensation der von den Sensoren 4 einlangenden Signale erfolgt. Der Ausgang des Meßverstärkers 9 ist an eine Auswertschaltung 11 gelegt.

Weiters ist ein Längengeber 10, z.B. ein sogenannter Schlitzinitiator, vorgesehen, der mittels einer von der Bewegung des Filmes 1 in Drehung versetzten Scheibe, die einen Teil eines

elekt. -optischen Wandler bildet, somit von der Bewegung des Filmes 1 abgeleitete elektrische Taktsignale erzeugt. Diese Taktsignale werden gleichfalls der Auswertschaltung 11 bzw. dem Zähler 13 zugeführt. Die Ausgangssignale der Auswertschaltung 11 werden an eine Speicher- bzw. Vergleicherschaltung 12 abgegeben, deren Ausgang an den Zähler 13 geführt ist. An den Zähler 13 ist zudem der Ausgang eines Kerberfassers 14, der den Beginn und das Ende eines Meßbereiches bestimmt, gelegt.

Die Wirkungsweise dieser Schaltung ist wie folgt: Aufgrund der Beleuchtung der Sensoren 4 durch die Lampe 2 treten an den Ausgängen der Sensoren 4 Signale auf, welche die sich ändernde Dichte des Filmes 1 in den jeweils durch die Sensoren 4 erfaßten Bereichen abbilden. Es erfolgt somit derart eine linienmäßige Abtastung des Filmes. Im Meßverstärker 9 erfolgt eine Veränderung dieser Signale derart, daß die Amplituden der vom Meßverstärker 9 abgehenden Signale der Dichte des Films im abgetasteten Bereich proportional sind.

Mittels der Taktsignale, die vom Längengeber 10 erzeugt werden, werden in der Auswertschaltung 11 die dieser von den Sensoren 4 zugeführten Signale periodisch abgetastet bzw. werden sie in Rechtecksignale umgewandelt, deren Amplitude der Lichtdurchlässigkeit des Filmes in den durch die Taktsignale bestimmten Stellen proportional ist. Hierauf werden die einzelnen Signalwerte der Speicher- bzw. Vergleicherschaltung 12 zugeführt, in der sie kurzfristig gespeichert und mit den jeweils darauf-

.... Signalwerte verglichen werden.

.... Differenz der beiden jeweils miteinander verglichenen Signalwerte einen vorbestimmten Wert erreicht bzw.
..... wird an den ..... 17 ein Kontaktimpuls ab-
g...... Dem Zähler 17 werden dem ... Kontaktimpulse zugeführt, die durch Helligkeitsschwankungen des Filmes über den
Sensoren 4 bewirkt werden.

Es wird diesbezüglich auf das in Fig. 2 dargestellte Impuls-
Diagramm verwiesen.

In den Zeilen a und b sind Impulse dargestellt, die vom
Kartenfühler 14 durch um Film 1 vorgesehene Kerben bewirkt
werden und den Beginn bzw. das Ende eines Abtastbereiches,
insbesondere eines Filmnegatives, signalisieren.

In der Zeile c sind die vom Schlitzinitiator 10 bewirkten
Taktimpulse dargestellt. Da die Auswertung der Meßwerte von
diesen Taktimpulsen, die hierdurch von der Filmgeschwindigkeit abgeleitet werden, ...... wird, ist die Auswertung
von der Laufgeschwindigkeit des Filmes, die sich ändern kann,
unabhängig.

In der Zeile d ist ein vom Meßverstärker 9 abgegebenes, die
Dichteschwankungen des vom zugeordneten Sensor 4 erfaßten
Filmbereiches abbildendes Signal dargestellt, das durch die
Auswertschaltung 11 im Abstand des Auftretens der Taktimpulse
(Zeile c) abgetastet wird, wodurch das in Zeile e gezeichnete,

abgestufte Signal entsteht. Die aufeinanderfolgenden einzelner.
Signalwerte dieses abgestuften Signals werden in der Speicher-
bzw. Vergleichsschaltung 12 jeweils miteinander verglichen,
wobei von dieser bei Erreichen oder Überschreiten eines vorgegebenen Differenzwertes an den Zähler 13 ein Kontrastimpuls
abgegeben wird. Solche Kontrastimpulse sind in der Zeile f
dargestellt.

Es dürfte aus den vorstehenden Ausführungen hervorgehen, daß
durch jeden der Sensoren 4 Signale gemäß den Zeilen d, e und
f bewirkt werden.

Soferne ein Negativbild scharfe Konturen und damit hohe
Kontraste aufweist, gelangen an den Zähler 13 durch jeden der
Sensoren 4 eine Vielzahl von Kontrastimpulsen. Soferne hingegen ein Negativbild unscharfe Konturen aufweist, unter -
scheiden sich die abgetasteten Dichtewerte oftmals nicht hinreichend voneinander, daß durch den Vergleicher 12 Kontrastimpulse bewirkt werden. Somit stellt die Anzahl der Kontrastimpulse, die insgesamt durch ein Negativbild bewirkt werden,
ein Maß für die Schärfe dieses Bildes dar.

Wenn die Kontrastimpulse, die durch ein Negativbild bewirkt
werden, eine vorgewählte Anzahl nicht erreichen, wird vom
Zähler 13 ein Signal abgegeten, welches das Kopieren des betreffenden Negativbildes verhindert. Wenn hingegen die vorgewählte Anzahl erreicht wird, wird das Kopieren dieses Bildes
eingeleitet. Am Ende eines Meßbereiches wird der Zähler 13

wieder zurückgestellt.

Aufgrund der Tatsache, daß die Abtastung der Signale durch
die Sensoren - von einem von der Bewegung des Filmes 1 abhängigen Längengeber gesteuert wird, gehen unterschiedliche
Geschwindigkeiten des Filmes 1 in die Bewertung nicht ein.

Unterschiedliche Bewertungen der Schärfen des Zentrums bzw.
des Umfeldes von Negativbildern können in einfacher Weise
dadurch erzielt werden, daß - ebenfalls gesteuert durch die
Taktimpulse - in den einzelnen Zeilen der Abtastung die
miteinander verglichenen Werte aus einem Anfangsbereich und
aus einem Endbereich der linienmäßigen Abtastung sich voneinander weniger stark unterscheiden müssen als die aus einem
mittleren Bereich, um Kontrastimpulse zu bewirken. Dies ist
etwar nisch dadurch erzielbar, daß jeder der von den Sensoren 4
abgehenden Kanäle von den Taktimpulsen derart gesteuert wird,
daß nach einer vorgewählten Anzahl von Taktimpulsen, wobei diese
Anzahl für die Kanäle unterschiedlich ist, Änderungen in der
Bewertung erfolgen, z.B. der für die Auslösung eines Kontrastimpulses erforderliche Grenzwert verändert wird. Da die genannten Anfangs- und Endbereiche von Zeile zu Zeile der Abtastung unterschiedlich sein können, können derart Zentren
und Umfelder beliebiger Gestaltung ausgewählt werden. Im einfachsten Falle können die durch das Umfeld bewirkten Kontrastimpulse unterdrückt werden. In Fig. 3 der Zeichnung ist eine
bekannte Aufteilung eines Bildes in Zentrum 15 und Umfeld 16
dargestellt.

BAD ORIGINAL

0001747

Der Tatsache, daß verschiedene Filmfabrikate unterschiedliche
Kontrastwerte aufweisen, die berücksichtigt werden müssen,
kann in einfacher Weise dadurch Rechnung getragen werden, daß
die Differenz, aufgrund welcher Kontrastimpulse erzeugt
werden, beliebig eingestellt werden kann.

Das Qualitätskriterium hinsichtlich der Schärfe kann durch
die Anzahl der Impulse pro Negativbild, die für die Einleitung des Kopiervorganges erforderlich sind, bestimmt
werden.

Ergänzend wird bemerkt, daß die beschriebene Vorrichtung
auch dazu herangezogen werden kann, die Dichte von Negativbildern zu messen, um die diesbezüglich für den Kopiervorgang
erforderlichen optimalen Werte zu bestimmen bzw. für den Kopiervorgang ungeeignete Negativbilder auszuscheiden. Schließlich
kann die Grunddichte gemessen und können die erhaltenen Werte
zur Empfindlichkeitsregulierung der Sensoren herangezogen
werden.

Mittels dieses Verfahrens bzw. dieser Vorrichtung können z.B.
die Formate 110 bzw. 126 bzw. 135 in etwa 10.000 bzw. 24.000
bzw. 35.000 Meßpunkte zerlegt werden.

Nachstehend ist anhand der Fig. 4 eine erfindungsgemäße
Vorrichtung näher erläutert.

BAD ORIGINAL

Von ihm gesteuerten Verteil 20 wird die Scannerlampe 2 auf konstanter Helligkeit geschaltet. Das Licht der Scannerlampe 2 gelangt durch den Film 1 und durch eine Blende 3 hindurch zu einer Vielzahl von über die Breite des Filmes 1 nebeneinander angeordneten photoelektrischen Elementen 4. Der Ausgang der photoelektrischen Elemente 5 ist jeweils an einem Verstärker 21 gelegt, dessen Ausgang einerseits direkt an einen ersten Eingang eines Komparators 22 und andererseits über einen elektronischen Schalter 23, z.B. einen Feldeffektransistor, und einen als Analogspeicher dienenden Kondensator 24 an einen zweiten Eingang des Komparators 22 geführt ist. Der Ausgang des Komparators 22 ist über einen Zähler 26, einen digitalen Schwellwertschalter 27 und ein Schieberegister 28 an den Kopierautomaten 30 gelegt.

Weiters ist ein Längengeber 31, z.B. ein Schlitzinitiator, vorgesehen, der über einen Zähler 32 den Verstärker 21 bzw. den elektronischen Schalter 23 sowie der Zähler 26, den Schwellwertschalter 27 und das Schieberegister 28 direkt steuert.

Der Ausgang des Zählers 32 und der Ausgang des Verstärkers 21 sind weiters an eine logische Verknüpfungsschaltung 34 geführt, deren Ausgang an Summenverstärker 35, 36 gelegt ist, wobei der Verstärker 35 der automatischen Dichtekorrektur für das Zentrum und der Verstärker 36 der automatischen Dichtekorrektur für das

fen dient. Die Ausgänge der Summenverstärker 35, 36 sind an eine Recheneinheit 38 geschaltet, deren Ausgang an den Kopierautomat 30 gelegt ist.

Die Wirkungsweise dieser Einrichtung ist wie folgt:

Die von den Elementen 4 abgegebenen Impulse werden im Verstärker 21 verstärkt, wobei der Grad der Verstärkung durch ein vom Zähler 32 abgegebenes Signal bestimmt wird. Da der Zähler 32 vom Längengeber 31 beaufschlagt wird, können hierdurch durch Bildzentren bewirkte Signalwerte mehr verstärkt werden als aus dem Umfeld stammende Signalwerte. Durch Programmierung des Zählers 32 können somit verschiedenartigste Zentren bzw. Umfelder vorgegeben werden.

Die vom Verstärker 21 abgegebenen Signalwerte werden einem ersten Eingang des Komparators 22 zugeführt und werden in diesem mit dem über einen zweiten Eingang zugeführten, am Kondensator 24 anliegenden Signalwert, der vom vorhergehenden Signal stammt, verglichen. Sobald der elektronische Schalter 23 durch einen Impuls des Längengebers 31 geöffnet wird, wird das vom Verstärker 21 abgegebene Signal auch an den Kondensator 24 geführt und wird es in diesem für den Vergleich mit dem folgenden Signalwert gespeichert.

Sofern die beiden an den Komparator 22 anliegenden Signalwerte einen vorgegebenen Differenzwert überschreiten, gibt der Komparator 22 an den Zähler 26 einen Impuls ab. Soferne weiters pro Bild eine vorgegebene Impulszahl unterschritten wird, wird durch das Schieberegister 28 die Kopierung des betreffenden Bildes verhindert.

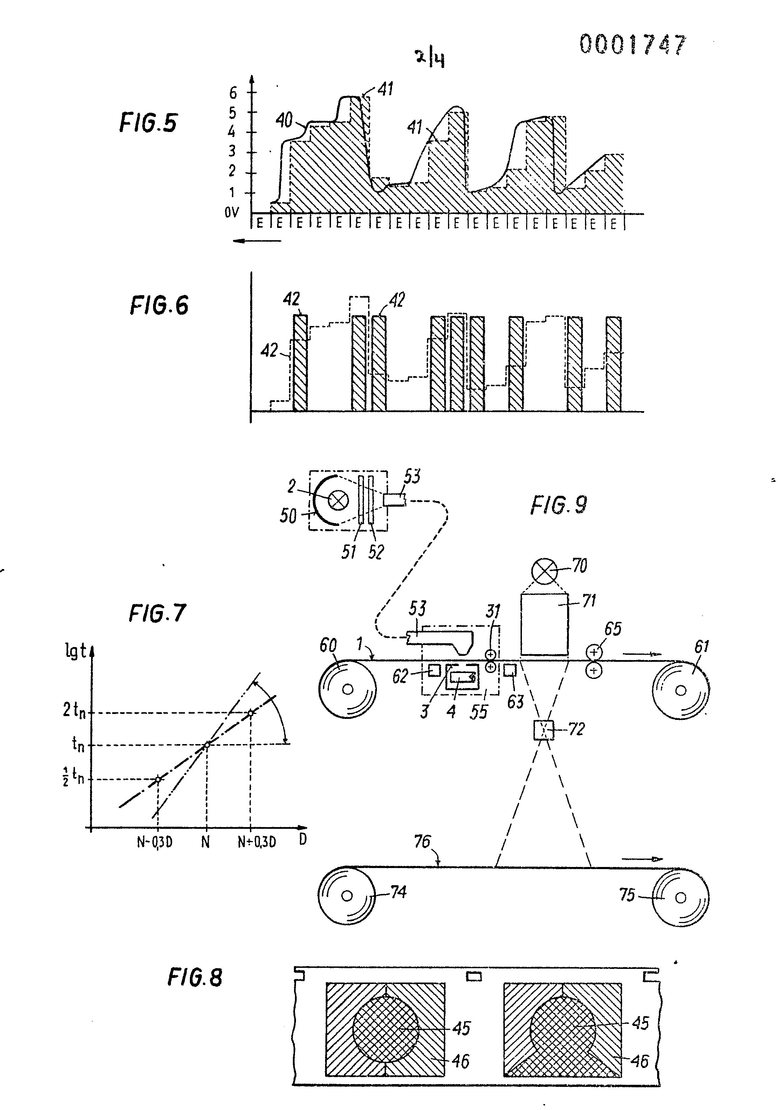

Die Diagramme der Fig. 5 und 6 entsprechen den Impulsdiagrammen der Fig. 2. Die Signalkurve 40 stellt das vom photoelektrischen Element 4 bzw. vom Verstärker 21 abgegebene Signal dar, das durch die Dichteänderungen in der durch das betreffende Element 4 abgetasteten Zeile des Filmnegatives bewirkt wird. Am Kondensator 24 liegen die über Zeiteinheiten E konstanten Signalwerte 41 an, deren Werte dem Signal 40 am Beginn der Zeiteinheit E gleich sind. Durch Auswertung der Differenzen werden durch den Komparator 22 die Impulse 42 bewirkt, die an den Zähler 26 abgegeben werden.

Von der Verknüpfungsschaltung 34 (Fig. 4) und den Summenverstärkern 35, 36 werden entsprechend den Dichten im Zentrum und im Umfeld der Negativbilder Signalwerte abgegeben, die durch die Recheneinheit 38 bewertet werden und zur Beeinflussung der Teilbelichtungszeiten der drei Filterfarben (blau, grün, rot) herangezogen werden.

Wenn hierdurch jedenfalls eine Teilbelichtungszeit außerhalb des vorgegebenen Bereiches liegt, wird das betreffende Bild ebenfalls vom Kopiervorgang ausgeschlossen.

Die Messung kann sich dabei auf eine einzige Farbe beschränken,
wodurch der meßtechnische Aufwand vermindert wird.

Hiezu wird folgendes bemerkt:

Jedes Negativ wird vor dem Kopiervorgang in den drei Grundfarben integral ausgemessen. Diese Messung wird in der Regel
durch Fotowiderstände oder Fotodioden ausgeführt, denen ein
Blau- bzw. ein Grün- bzw. ein Rot-Filter vorgeschaltet ist.
Damit kein Licht für das Kopieren verloren geht, wird nur das
Streulicht zur Messung benützt.

Durch die Messzellen fließt ein der Transparenz des Negatives
proportionaler Strom zu Rechenverstärkern. Da für die Belichtungsparameter, die im Grunde alles Dichtewerte sind, einfache Addier-
Schaltungen benützt werden können, müssen nun die durch die
Messung gewonnenen Transparenzsignale ebenfalls in Dichtewerte
umgeformt werden. Es gilt die Beziehung $D = \log 1/T$.

Diese Transformation wird durch eine logarithmische Rückkopplung der Rechenverstärker erreicht. Die dadurch erhaltenen
Dichsignale sind der Dichte des Negativs proportional. Da also
ein Dichtesignal ein reines Helligkeitssignal sein muß, wird
es zu drei gleichen Teilen zu den Farbkorrektursignalen addiert.

Um jedoch dieses Helligkeitssignal einerseits an die nichtlinearen
Kennlaten des Film- und Papiermaterials anzupassen und andererseits sämtliche Nichtlinearitäten in der weiteren Verarbeitung

der Analogsignale zu kompensieren, bedient man sich der sogenannten "Density-Slopes".

In Folgenden ist nun die Arbeitsweise der Density-Slopes beschrieben:
Aus dem Diagramm der Fig. 7 ist zu ersehen, daß ein als normal N
klassifiziertes Negativ eine Normalbelichtungszeit von tN beim
Kopiervorgang erhält. Aus der Überlagerung eines Normalnegatives
(das sich im Slope-Center befindet) mit einem Neutraldichtefilter
von 0,3D (N + 0,3D) ergibt sich bei der eingestellten Neigung
eine Verdoppelung der Belichtungszeit = 2 tN. Diese Neigung hat
demgemäß bei Abnahme der Dichte um 0,3D (N - 0,3D) eine Halbierung
der Belichtungszeit tN:2 zur Folge. Die Fig. 7 zeigt deutlich, daß
bei allen Veränderungen der Slopeeinstellung das Normalnegativ
seine "Normalbelichtungszeit" beibehält.

Die hier beschriebene Dichtebeurteilung kann als "klassische"
Methode bezeichnet werden. Die Praxis ergab nämlich, daß die
integrale Ausmessung der Streulichtes allein zu ungenauen Meßergebnissen führt. Dies schon aus dem Grund, weil nicht alle Felder
des Negatives gleiche Wertigkeit zur Dichtebeurteilung besitzen.
Ein völlig geschwärztes Negativ mit nur einer besonders transparenten
Stelle würde mit dieser Methode eventuell als normal N klassifiziert
werden. Moderne Geräte zur Dichtemessung teilen daher das Meßfeld
in ein sogenanntes Zentrum und ein Umfeld.

Die Fig. 8 zeigt zwei gebräuchliche Mehrfeldausschnitte bei Negativen des Filmformates 110. Die doppelt schraffierten Flächen 45 bilden das Zentrum und die einfach schraffierten Flächen 46 werden als Umfeld gewertet, wobei das linke Umfeld und rechte Umfeld ebenfalls verschieden bewertet werden können, um auch um 90 Grad verdrehte Aufnahmen berücksichtigen zu können.

In Fig. 9 ist der Aufbau einer Kopiervorrichtung schematisch dargestellt. Wie daraus ersichtlich ist, ist die Scannerlampe 2 auf der linken Seite von einem Kaltlichtspiegel 50 umgeben. Das von der Lampe 2 abgestrahlte Licht tritt durch ein Interferenzfilter 51 und ein Wärmeschutzfilter 52 in einen Glaslichtleiter 53 über. Der Glaslichtleiter 53 ist als Querschnittsumformer ausgebildet, an dessen Ausgang das Licht über die Breite des Filmes 1 austritt und durch den Blendenschlitz zum photoelektrischen Element 4 gelangt, das zum Schutz gegen Fremdlicht in einem Gehäuse 55 angeordnet ist.

Der Film 1 wird von einer Spule 60 abgewickelt und zuerst an einem Markieraufnehmer 62 vorbei, hierauf zwischen dem Lichtaustritt des Lichtleiters 53 und der Blende 3 hindurch und weiters am Längengeber 31 und an einem Aufnehmer 63, der der Positionierung dient, vorbei geführt. Hierauf gelangt er in den Kopierstrahlengang und wird schließlich mittels einer Transportvorrichtung 65 der Aufwickelspule 61 zugeführt.

Für den eigentlichen Kopiervorgang ist eine Lichtquelle 70 vorgesehen, die über einen Lichtschacht 71 den Film 1 beleuchten, wodurch über eine Optik 72 das von einer Spule 74 abgewickelte und auf einer Spule 75 aufgewickelte Kopierpapier 76 belichtet wird.

Der Scanner muß zumindest folgenden mechanischen Forderungen genügen:

Die wichtigsten mechanischen Erfordernisse sind:

a) Die äußeren Abmessungen des Scanners müssen es erlauben, ihn zwischen der Filmabwickelspule und der Kopierstation eines Rollenkopiergerätes unterzubringen.

b) Durch den Transport des Films von der Abwickelspule durch den Scanner hindurch zur Kopierstation darf keine Beeinträchtigung des Filmtransportmechanismus des Rollenkopiergerätes erfolgen.

c) Um jede mechanische Beschädigung des Filmes zu vermeiden, muß die Messung berührungslos erfolgen.

d) Die Durchleuchtung des Filmes im Scanner muß mittels Kaltlicht erfolgen, um bei Anhalten des Filmtransportes Hitzeschäden am Negativ zu vermeiden.

e) Die Ein- bzw. Durchführung des Filmes durch den Scanner muß ohne zeitraubenden Arbeitsaufwand möglich sein und durch technisch unverständige Personen durchgeführt werden können.

Ergänzend wird darauf hingewiesen, daß eine Schlitzblende
nicht unbedingt erforderlich ist. Dies gilt z.B. beim Einsatz von Laserdioden.

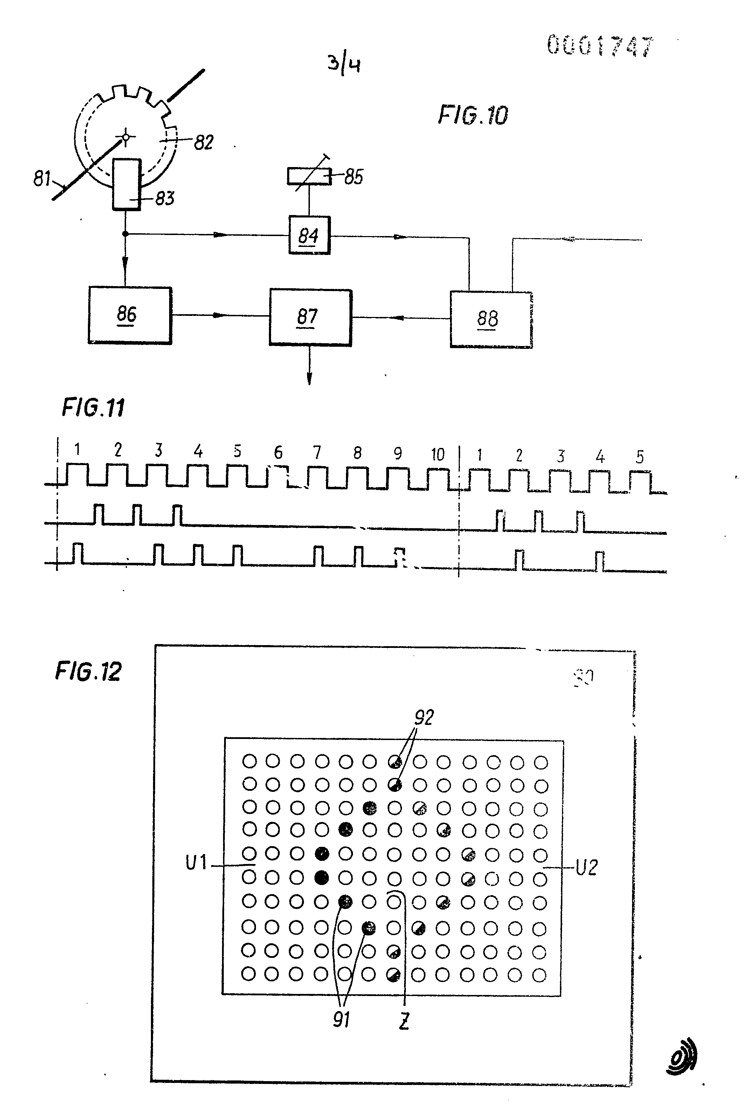

Wie aus Fig. 10 ersichtlich ist, werden von einem Längensignalgeber, beispielsweise einem Schlitzinitiator, Signale
abgegeben. Der Schlitzinitiator besteht aus einer auf einer
Welle 81 sitzenden Zahnscheibe 82, die in den Strahlengang
einer Lichtquelle, die auf ein Fotoelement 83 gerichtet ist,
angeordnet ist.

Die Längengebersignale, die vom Fotoelement 83 abgegeben
werden, werden einerseits einem Zähler 86 und andererseits
einem Signalgeber 84 zugeführt. Vom Signalgeber 84 werden
aufgrund der Steuerung durch die Längengebersignale in Abhängigkeit von einem Stellglied 85 zusätzliche Signale, sog.
Bewertungssignale, abgegeben, die zugleich mit den Kontrastimpulsen einem zweiten Zähler 87 zugeführt werden. Die Zählerstände der Zähler 86 und 87 werden einem Vergleicher 88 zugeführt. Soferne eine bestimmte Verhältniszahl erreicht wird,
werden vom Vergleicher 88 beim Übergang vom Umfeld in das Zentrum
bzw. beim Übergang vom Zentrum in das Umfeld bzw. am Ende der
Teile Signale abgegeben, die feststellen, daß die betreffende
Teile den Schärfekriterien entsprochen hat. Soferne hinreichend
viele dieser Signale pro Negativ abgegeben werden, wird dieses
Negativ für den Kopiervorgang freigegeben.

Wie aus Fig. 11 ersichtlich ist, werden in Abhängigkeit von den Taktimpulsen (erste Teile) Bewertungsimpulse (zweite Teile) bzw. Kontrastimpulse (dritte Teile) abgegeben.

In Fig. 11 ist ein an sich bekannter Kreuzschienenverteiler dargestellt, der als Drallglied 85 in Fig. 10 verwendet werden und mit dessen Hilfe man, in der erforderlichen Weise Bewertungssignale erzeugen kann. Die Konfiguration des Zentrums bzw. des Umfeldes wird durch die Anordnung der Steckstifte angegeben. Dabei sind die Stecker 91, durch die bei einer Abtastung von links nach rechts der Übergang vom linken Umfeld U1 in das Zentrum Z bewirkt werden soll, als schwarze Kreisflächen gezeichnet, wogegen die Stecker 92, durch die der Übergang vom linken Umfeld U1 in das rechte Umfeld U2 bzw. vom Zentrum Z in das rechte Umfeld U2 bewirkt werden soll, als schwarze Halbkreisflächen dargestellt sind.

Ergänzend wird darauf hingewiesen, daß jeweils diejenigen Zähler, die nicht mit Kontrastsignalen bzw. Bewertungssignalen beaufschlagt werden, mit den Taktsignalen beaufschlagt werden können, wodurch die Bewertung der Zählerstände erleichtert wird.

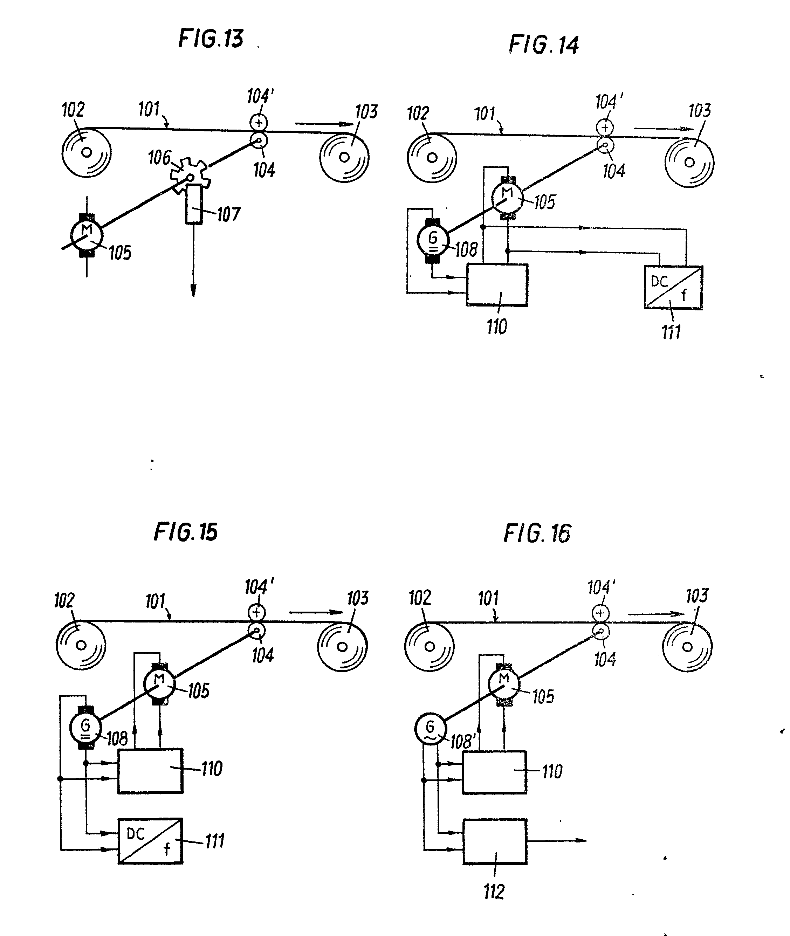

Wie aus dem Ausführungsbeispiel gemäß Fig. 13 ersichtlich ist, wird der im Kopierautomat bewegte Film 101, der von einer Ablaufspule 102 abgezogen und auf eine Aufwickelspule 103 aufgewickelt wird, mittels zwei einander gegenrotierenden Förderwalzen 104, 104' bewegt, wobei die Förderwalze 104 von einem Motor 105 angetrieben wird.

Von der Motorwelle wird weiters eine gezahnte Scheibe 106 angetrieben, die zwischen einer nicht dargestellten Lichtquelle und einem Fotoelement 107 angeordnet ist. Durch die Rotation der Zahnscheibe 106 wird der von der Lichtquelle auf das Fotoelement 107 gerichtete Lichtstrahl unterbrochen, wodurch vom Fotoelement 107 Impulse abgegeben werden, deren Frequenz der Geschwindigkeit des Filmes proportional ist und deren Anzahl von der Wegstrecke abhängt, die der Film 101 im Kopierautomaten durchlaufen hat. Bei diesem Ausführungsbeispiel sind der Antrieb für die Filmbewegung und die Einrichtung zur Erzeugung von Längengebersignalen miteinander mechanisch gekuppelt.

Die Fig. 14 zeigt eine insoferne geänderte Ausführungsform, als mit der Welle des Motors 105 ein Gleichstromgenerator 108 angetrieben wird, dessen Ausgang an eine Regelschaltung 110 zur Regelung des Motors 105 angelegt ist. Der Ausgang der Regelschaltung 110 ist einerseits an einen Spannungsfrequenzwandler 111 gelegt, der das Längengebersignal abgibt und

andererseits an den Antriebsmotor 105 geführt. In diesem Ausführungsbeispiel ist der Antrieb für die Filmbewegung mit der Einrichtung zur Erzeugung von Längengebersignalen elektromagnetisch gekuppelt.

Das Ausführungsbeispiel nach Fig. 15 unterscheidet sich vom Ausführungsbeispiel nach Fig. 14 dadurch, daß der Ausgang des Gleichspannungsgenerators 108 einerseits an den Spannungsfrequenzwandler 111 und andererseits an eine Regelschaltung 110 für den Antriebsmotor 105 gelegt ist. Vom Spannungsfrequenzwandler 111 werden die Längengebersignale abgegeben.

Das Ausführungsbeispiel nach Fig. 16 unterscheidet sich vom Ausführungsbeispiel nach Fig. 15 insoferne, als vom Antriebsmotor 105 anstelle eines Gleichspannungsgenerators ein Wechselspannungsgenerator 108' angetrieben wird, dessen Ausgang einerseits an einen Impulsformer 112 und andererseits an die Regelschaltung 110 gelegt ist, wobei die Längengebersignale vom Impulsformer 112 abgegeben werden.

Bei den Ausführungsbeispielen nach Fig. 15 und 16 ist der Antrieb für die Filmbewegung mit der Einrichtung zur Erzeugung von Längengebersignalen elektrisch gekuppelt.

0001747

München, den 21. September 1978
Anwaltsaktenz.: 172-Pat.9 Europa

Patentansprüche

1. Verfahren zur Bewertung von Filmnegativen hinsichtlich
ihrer Kopierbarkeit, dadurch gekennzeichnet, daß die Transparenz der Filme längs Linien abgetastet wird, die Transparenz
abbildende Einzelsignale mit den jeweils darauf folgenden
Einzelsignalen verglichen werden und bei Erreichen bzw. Überschreiten einer vorwählbaren Differenz der aufeinander folgenden
Einzelsignale Kontrastsignale abgegeben werden, die gezählt
werden, wobei bei Unterschreiten einer vorbestimmten Anzahl
von Kontrastsignalen pro Bild das Ausscheiden des betreffenden
Negativbildes vom Kopiervorgang bewirkt wird.

2. Verfahren nach Anspruch 1, dadurch gekennzeichnet, daß
die Anzahl von Kontrastsignalen pro Bild, bei deren Nichterreichen das Ausscheiden eines Bildes bewirkt wird, einstellbar
ist.

3. Verfahren nach einem der Ansprüche 1 und 2, dadurch gekennzeichnet, daß die zur Abgabe eines Kontrastimpulses vorgewählte Differenz der Einzelsignale für unterschiedliche Bereiche
der Negativbilder einstellbar ist.

4. Verfahren nach einem der Ansprüche 1 und 2, dadurch gekennzeichnet, daß die die Kontrastsignale bewirkenden Einzelsignale in bestimmten Bereichen des Negativbildes unterschiedlich
verstärkt werden.

0001747

5. Verfahren nach einem der Ansprüche 1 bis 4, dadurch gekennzeichnet, daß die Einzelsignale von den die Transparenz des Filmes in den abgetasteten Linien abbildenden Signalen mittels eines von der Filmbewegung gesteuerten Taktsignales abgeleitet werden.

6. Verfahren nach Anspruch 4, dadurch gekennzeichnet, daß die Einzelsignale den Werten des die Transparenz des Filmes abbildenden Signales in den Zeitpunkten des Auftretens der Taktsignale entsprechen.

7. Verfahren nach einem der Ansprüche 1 bis 6, dadurch gekennzeichnet, daß die Transparenz der Filme längs zu deren Bewegungsrichtung paralleler Zeilen abgetastet wird.

8. Verfahren nach einem der Ansprüche 1 bis 7, dadurch gekennzeichnet, daß die Transportgeschwindigkeit des Filmes keinen Einfluß auf die Auswertung der die Transparenz abbildenden Einzelsignale hat.

9. Verfahren nach einem der Ansprüche 1 bis 8, dadurch gekennzeichnet, daß die die Transparenz abbildenden Einzelsignale gleichzeitig für die partielle Dichtebewertung des Filmnegatives herangezogen werden.

10. Vorrichtung zur Durchführung des Verfahrens nach einem der Ansprüche 1 bis 9, gekennzeichnet durch eine feststehende Lichtquelle (2), mittels welcher durch den Schlitz (3') einer Blende (3) hindurch jenseits des Filmes (1) angeordnete
lichtempfindliche Sensoren (4) beaufschlagbar sind, deren
Ausgänge an eine Auswertschaltung (11) geführt sind, an
die ein Zähler (13) anschließt, dessen Ausgang den Kopiervorgang für die Negativbilder des Filmes (1) steuert.

11.   Vorrichtung nach Anspruch 10, dadurch gekennzeichnet,
daß die Auswertschaltung (11) und der Zähler (13) durch
einen Schlitzinitiator (10) gesteuert werden, der seinerseits von der Bewegung des Filmes gesteuert wird.

12.   Vorrichtung nach einem der Ansprüche 10 und 11, dadurch gekennzeichnet, daß die Ausgänge der Sensoren (4)
an einen die Signale korrigierenden Meßverstärker (9)
geführt sind.

13.   Vorrichtung nach einem der Ansprüche 10 bis 12, dadurch gekennzeichnet, daß die Sensoren (4) quer zur Bewegungsrichtung des Filmes (1) nebeneinander angeordnet
sind.

14.   Vorrichtung nach einem der Ansprüche 10 bis 13, dadurch  gekennzeichnet, daß zur Beaufschlagung der fotoelektrischen Elemente Laserdioden herangezogen werden.

15. Verfahren nach Anspruch 1, dadurch gekennzeichnet, daß zu den Kontrastsignalen weitere Signale hinzugefügt werden, deren Anzahl in Abhängigkeit davon, ob eine Bewertung des Umfeldes oder des Zentrums des Bildes des Filmnegatives erfolgt, gewählt wird.

16. Verfahren nach Anspruch 15, dadurch gekennzeichnet, daß die Summe sämtlicher Signale pro Zeile ermittelt wird und bei Erreichen einer vorgegebenen Mindestsumme ein Freigabesignal abgegeben wird.

17. Verfahren nach Anspruch 15, dadurch gekennzeichnet, daß für das Zentrum bzw. die Umfeldbereiche jeweils das Verhältnis der Summen der Kontrastsignale und der zusätzlichen Signale zu den im gleichen Zeitraum abgegebenen Taktimpulsen ermittelt wird und jeweils bei Erreichen eines vorgegebenen, für alle Bereiche konstanten Grenzwertes ein Freigabesignal abgegeben wird.

18. Verfahren nach einem der Ansprüche 14 bis 17, dadurch gekennzeichnet, daß für die einzelnen Bereiche des Filmnegatives, für die unterschiedlichen Schärfekriterien gelten, unterschiedliche Anzahlen von zusätzlichen Signalen pro Anzahl der Taktimpulse eingestellt werden.

19. Vorrichtung nach den Ansprüchen 14 bis 18, dadurch gekennzeichnet, daß die Hinzufügung der zusätzlichen Signale durch einen Kreuzschienenverteiler gesteuert wird.

20. Vorrichtung zur Bewertung von Filmnegativen hinsichtlich ihrer Kopierfähigkeit mit Förderwalzen für den Film, optischen Abtasteinrichtungen, Zählern und Einrichtungen zur Erzeugung von Längengebersignalen zur Definition der Lage des Filmes im Kopierautomaten, dadurch gekennzeichnet, daß die Einrichtung zur Erzeugung der Längengebersignale mit dem Antrieb für die Filmbewegung mechanisch oder elektromagnetisch gekuppelt ist.

21. Vorrichtung nach Anspruch 20, dadurch gekennzeichnet, daß die Antriebswelle für die Filmbewegung mit einer Loch-, Raster- oder Spiegelscheibe (106) gekuppelt ist, die zwischen einer Lichtquelle und einem Fotoelement (107), von welchem die Längengebersignale abgegeben werden, angeordnet ist (Fig. 13).

22. Vorrichtung nach Anspruch 20, dadurch gekennzeichnet, daß die Antriebswelle für die Filmbewegung mit einem Generator gekuppelt ist, von welchem die Längengebersignale abgegeben werden.

23. Vorrichtung nach Anspruch 22, dadurch gekennzeichnet, daß der Generator als Gleichspannungsgenerator (108) ausgebildet ist, dessen Ausgang an einen Frequenzwandler (111)
und an eine Regelschaltung (110) für den Antriebsmotor (105)
angelegt ist, wobei die Längengebersignale vom Frequenzwandler (111) abgegeben werden.

24. Vorrichtung nach Anspruch 22, dadurch gekennzeichnet,
daß der Generator als Wechselspannungsgenerator (108') ausgebildet ist, dessen Ausgang an einen Impulsformer (112) und
an eine Regelschaltung (110) für den Antriebsmotor (105)
gelegt ist.

0001747

**FIG.1**

**FIG.2**

**FIG.3**

**FIG.4**

0001747

FIG.5

FIG.6

FIG.7

FIG.8

FIG.9

FIG.10

FIG.11

FIG.12

FIG.13

FIG.14

FIG.15

FIG.16

**Europäisches Patentamt**

## EUROPÄISCHER RECHERCHENBERICHT

Nummer der Anmeldung

EP 78 100 968.3

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | DE - A - 2 244 340 (AGFA-GEVAERT)<br>* Ansprüche 1-9; Seite 14 letzter Absatz bis Seite 15; Fig. 1-7 * | 1,2,3, 5,7,8, 10,12, 13 | G 03 B 27/72 |
| – | DE - A - 2 142 176 (EASTMAN KODAK)<br>* Ansprüche 1 u. 6 * | 1,9 | |
| A | DE - A - 2 652 954 (GRETAG)<br>* Anspruch 1 * | | **RECHERCHIERTE SACHGEBIETE (Int. Cl.²)** |
| A | DE - A - 2 445 831 (AGFA-GEVAERT)<br>* Anspruch 1; Fig. 1 * | | G 03 B 27/72<br>G 03 B 27/76<br>G 03 B 27/78<br>G 03 C 5/02<br>G 01 N 21/30 |
| A | DE - A - 2 438 105 (AGFA-GEVAERT)<br>* Anspruch 1 * | | |
| A | DE - A - 2 048 061 (AGFA-GEVAERT)<br>* Anspruch 1 * | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | |
|---|---|---|
| **Recherchenort**<br>Berlin | **Abschlußdatum der Recherche**<br>4-12-1978 | **Prüfer**<br>HOPPE |

EPA form 1503.1  06.78